# EUROPEAN PATENT APPLICATION

(11) **EP 4 360 463 A1**
(43) Date of publication of application: **01.05.2024**
(21) Application number: 22203913.3
(22) Date of filing: 26.10.2022
(51) Int. Cl.: A23G 1/08, B30B 9/04

(54) **A ROBUST PRESS FOR PROCESSING FAT CONTAINING MASS**

(71) Applicant: Royal Duyvis Wiener B.V., 1541 KD Koog aan de Zaan (NL)
(72) Inventor: Huijbers, Hans, 1540 AA Koog aan de Zaan (NL); van Kampen, Dirk, 1540 AA Koog aan de Zaan (NL)
(74) Representative: De Vries & Metman

(57) **Abstract**

The invention relates to a press (1) for separating fat containing mass, in particular mass from oily seeds, such as cocoa mass, into fat, in particular liquid fat, and cake, comprising an hydraulic cylinder (2) and plunger (3), a retainer (4), and a plurality of parallel guide beams (5), extending between the hydraulic cylinder and the retainer, the hydraulic cylinder, beams, and retainer together forming a frame, and a plurality of pressing elements (7) disposed in the frame and slidingly mounted on the guide beams, the pressing elements comprising a pot (8) having a cavity for receiving mass to be pressed and a squeezer (9) having a plug (10) located at least partially in the cavity, characterized by the combination of i) the guide beams (5) extending through mounting sections of the pots (8) and squeezers (9), which mounting sections surround the guide beams, and *ii)* the plugs (10) of the squeezers (9) facing towards the plunger (3).

## Description

The present invention relates to a press for separating fat containing mass, in particular mass from (milled) oily seeds, such as cocoa mass, into fat, in particular liquid fat, and cake, comprising
an hydraulic cylinder and plunger, housed in the cylinder, a retainer, also known as 'counterpart', and a plurality of, e.g. two, parallel guide beams, extending between the hydraulic cylinder and the retainer, - the hydraulic cylinder, beams, and retainer together forming a frame, -
and a plurality of pressing elements disposed in the frame and slidingly mounted on the guide beams, the pressing elements each comprising a pot having a cavity for receiving mass to be pressed and a squeezer, also known as counter-pot', having a plug located at least partially in the cavity. Typically, filters are disposed in front of the plug and on the side of the cavity opposite the plug, e.g. on the back side of the adjoining squeezer, and/or one or more springs are provided in the pressing elements, between the pot and squeezer to push the same apart.

During a pressing cycle, the cavities in the pressing elements are filled with e.g. cocoa mass via supply lines (inlets) and subsequently compressed. The cocoa butter is pressed out through the filters and discharged. When a sufficient amount of butter has been pressed from the cocoa mass, the pressure is released and the press is returned to its starting position. At that position, the pots are pushed over the squeezers, and the cocoa cakes fall out. Finally, the pots are returned to the starting position and the cycle is complete.

Various cocoa presses have been made available by companies such as Duyvis, Nagema/Heidenau, Carle Montanari, Bauermeister, and GSR.

WO 92/12853 addresses the problem of increasing the productivity of a squeezer for squeezing oil-containing materials, particularly a mass of cocoa, without increasing the number or diameter of the squeezing chambers. To this end, the filtering elements placed on the chamber walls have a non-planar shape having an increased area, e.g. hemispherical, tapered or "serpentine".

EP 1 042 961 relates to a press for separating cocoa mass into cocoa cake and cocoa butter, comprising a frame, in which one or more pressure elements are disposed, and means for compressing the pressure elements, wherein the pressure elements each comprise a cavity for receiving cocoa mass to be pressed, in which cavity at least one filter and at least one squeezer are present.

A disadvantageous phenomenon that sometimes occurs in known presses, near the end of a pressing cycle and in particular when the press is operated at higher production rates, is so-called 'cake explosion'. It is an object of the present invention to reduce and ideally prevent the risk of cake explosions.

To this end, the press according to the invention is characterised by the combination of i) the guide beams extending through mounting sections of the pots and squeezers, preferably at least including the pot and squeezer adjacent the hydraulic cylinder, which mounting sections surround the guide beams, and *ii)* the plugs of the squeezers facing towards the plunger and thus away from the retainer.

In an embodiment, the guide beams extend through mounting sections of most, preferably all pots and squeezers disposed in the frame.

In another embodiment, the guide beams extend through mounting sections in the (housing of the) hydraulic cylinder and/or the retainer.

In another embodiment, the mounting sections (of the squeezer(s), pot(s), hydraulic cylinder, and/or retainer) surround at least 270° of the circumference of respective guide beams, preferably completely surround the guide beams, i.e. envelop the entire circumference of the guide beams.

The mounting sections of the pots and squeezers can be provided e.g. in lateral extensions, e.g. 'ears', of the pots and squeezers.

The present invention addresses the problem of cake explosion, a phenomenon that occurs when a large amount of cocoa butter has already been pressed from the cocoa mass near the end of the pressing cycles, i.e. when the remaining cocoa mass is practically solid and the pressure in the hydraulic cylinder and in the cocoa mass and the forces in the press are very high (specific pressure in the pots may reach several hundred bar and even more than a thousand bar). The phenomenon of cake explosion is complex and presently not entirely understood. However, it was found that the combination of reversing the orientation of the squeezers, with the plugs facing towards the plunger, and the guide beams extending through mounting sections of the pot(s) and squeezer(s) cylinder, which mounting sections surround the guide beams, reduces or even prevents the risk of cake explosion.

In an embodiment, the pots and squeezers and preferably also the (housing of the) hydraulic cylinder comprise mounting openings, e.g. located in lateral extensions of the pots and squeezers and near the side walls of the (housing of the) hydraulic cylinder, that correspond in shape, typically round, to the cross-section of the guide beams and the guide beams extend through these openings.

In another embodiment, the distance between the openings in the hydraulic cylinder is larger than the distance between the openings in the pots and squeezers, preferably at least 0,005% larger. It is preferred that the distance is at least 0,008% larger, preferably in a range from 0,01% to 0,03% larger. This difference provides space for inward bending of the guide beams during pressing. By providing space any inwardly directed clamping force exerted, during pressing, by the guide beams on the pots is reduced.

In an embodiment, at least during pressing and preferably also during filling, the squeezers abut the pots of adjoining pressing elements.

Thus, during pressing, the squeezers will positively drive the pots forward. More specifically, the end faces of squeezers facing away from the hydraulic cylinder will push the abutting pots in the (axial) direction away from the hydraulic cylinder. It is preferred that all squeezers abut the pot of the next, adjoining pressing element, except the squeezer farthest removed from the hydraulic cylinder which squeezer preferably abuts the retainer.

The invention also relates to a press for separating fat containing mass, as described above, into fat and cake, comprising an hydraulic cylinder and plunger, a retainer, and a plurality of parallel guide beams, extending between the hydraulic cylinder and the retainer, the hydraulic cylinder, beams, and retainer together forming a frame, and a plurality of pressing elements disposed in the frame and slidingly mounted on the guide beams, the pressing elements comprising a pot having a cavity for receiving mass to be pressed and a squeezer having a plug located at least partially in the cavity, the press comprising pulling elements arranged to pull, during cake extraction, the squeezers in the direction of the hydraulic cylinder.

In an embodiment, the pulling elements are arranged to pull, during cake extraction, the plugs of the squeezers through the pots, i.e. such that the end faces, typically provided with and/or formed by filter plates and filters, extend from the pots.

By pulling instead of pushing, the mechanism for opening the press to extract the cakes can be configured more compact and/or robust, e.g. pusher rods extending through practically the entire press can be omitted, simplifying maintenance, e.g. maintenance involving the removal of a pot and/or squeezer, and/or facilitating cleaning.

In an embodiment, the pulling elements comprise pull rods between neighboring pots, i.e. pots of neighboring pressure elements, pull rods between neighboring squeezers, and at least one mechanical actuator, such as one or more, e.g. two or more, e.g. four, hydraulic cylinders to pull the squeezers towards the main hydraulic cylinder and thus open the press to extract the cakes. The at least one mechanical actuator can be positioned e.g. next to or in the main hydraulic cylinder.

In an embodiment, the pulling elements are arranged to pull the squeezer nearest the main hydraulic cylinder towards the main hydraulic cylinder. It is preferred that a dummy plate, e.g. a squeezer without the plug, is present between the hydraulic cylinder and the pot nearest the hydraulic cylinder and that the at least one actuator is attached to the dummy plate, which in turn is attached to the nearest squeezer via at least one pulling rod.

In an embodiment, the press has at least a filling or rest position (wherein the cavities are closed) and an open position (for extracting the cakes) and, in the filling position, the plunger extends farther from the hydraulic cylinder than in the open position, preferably at least 5 centimeters farther, preferably at least 8 centimeters farther.

Typically, filters are disposed in front of the plug and on the side of the cavity opposite the plug (on the back side of the adjoining squeezer). It is preferred that the distance between the filters is in a range from 20 to 80 mm, preferably in a range from 25 to 70 mm, preferably in a range from 30 to 60 mm, preferably larger than 30 and smaller than 60 mm.

In an embodiment, the diameter of the hydraulic cylinder is in excess of 500 mm, preferably in excess of 550 mm, e.g. 800 mm, and/or the diameter (Dp) of the cavities is in excess of 400 mm, preferably in excess of 450 mm, preferably in excess of 500 mm, e.g. 600 mm, and/or wherein the number of pressing elements is in a range from 10 to 26, preferably in a range from 16 to 24, e.g. 20 pressing elements, and/or wherein the cavities are cylindrical and/or wherein said filters are flat or substantially flat. A smaller distance between the filters implies a smaller volume of the cavities, but also enables a decrease of the duration of the individual cycles, i.e. enables more cycles per unit of time. It was found that, in practice, the latter can overcompensate the former, yielding a higher production capacity.

For the sake of completeness, attention is drawn to the following patent publications.

DE 1 247 137 relates to a multi-pot press for de-oiling cocoa, with press pots and pot pistons that are connected to sliding members and the closing direction of which runs counter to the pressing direction. DE 1 247 137 addresses a problem, namely the squirting of cocoa mass, that occurs while the cocoa mass is still liquid, i.e. at the beginning of the pressing cycles when the pressure in the hydraulic cylinder and in the liquid cocoa mass and the forces in the press are still relatively low. In DE 1 247 137, the root cause of the squirting of liquid cocoa mass is attributed to higher friction or tilting of the pressure pots.

GB 512 536 relates to a press for separating liquids from solids having a series of plunger-bearing plates mounted in column formation between a resistance head and a hydraulic ram.

US 2,072,942 relates to an expressing press having a horizontally disposed series of co-axial press chambers, coaxial filter plates relatively movable axially forming the end walls of said chambers.

DE 1 109 501 discloses a cocoa press comprising an inlet for cocoa mass and an outlet for cocoa butter. The filling height of the pot (*Preßtopf*) is preferably about 20 mm and should not exceed 30 mm. EP 0 634 268 is directed to a male pot for cacao and oil seed presses. DE 14 990 concerns a cocoa press comprising a plurality of pressing elements (Kasten) each provided with a single filter means.

The invention will now be explained in more detail with reference to the drawings, which schematically show an example of an hydraulic cocoa press according to the invention.
Figure 1 is a side view (upper half) and a cross-section of a first example of an hydraulic cocoa press according to the invention, while the press is in the filling position.
Figure 2 shows the press of Figure 1 during pressing.
Figure 3 shows the press of Figures 1 and 2 in the opened position for cake extraction.
Figure 4 shows the press of Figures 1-3 returning to the filling position.
Figure 5 is a perspective view of the hydraulic cylinder of a second example of an hydraulic cocoa press according to the invention.

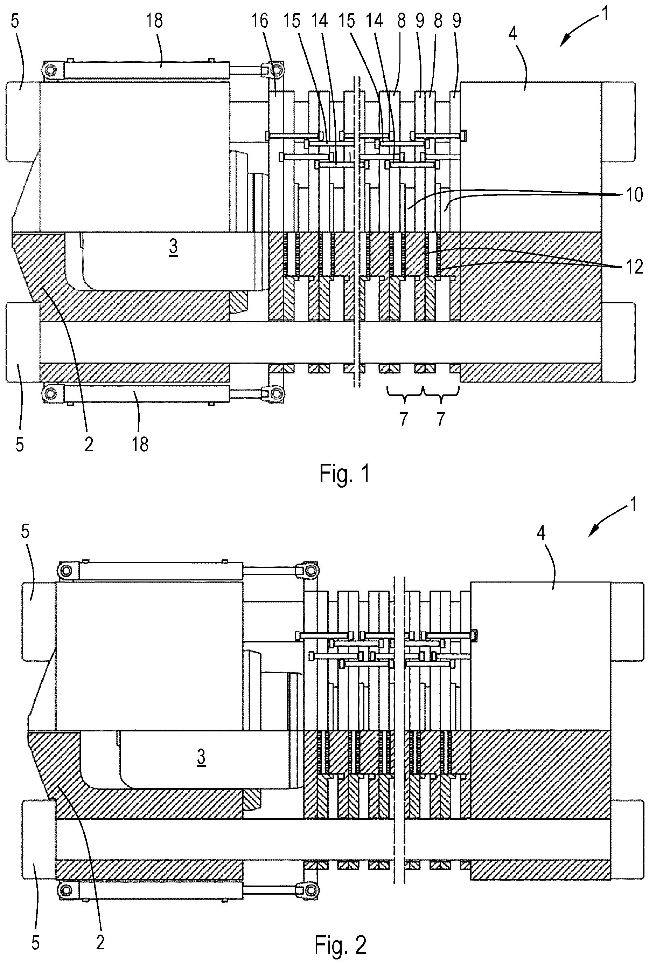

Figures 1-3 show an hydraulic cocoa press 1 for separating cocoa mass into fat, such as fat that is liquid due to elevated operating temperatures, and cake. The press comprises an hydraulic cylinder 2 and a plunger 3, a retainer 4, also known as 'counterpart', and a plurality, typically two, three, or four parallel guide beams or tie rods 5, extending between the hydraulic cylinder and the retainer. The hydraulic cylinder, rods, and retainer together form a frame. A plurality of pressing elements 7, e.g. sixteen, eighteen or twenty, is disposed in the frame and slidingly mounted on the guide beams and located between the cylinder and the retainer.

The pressing elements each comprise a pot 8 having a circle-cylindrical cavity for receiving mass to be pressed and a squeezer 9 having a circle-cylindrical plug 10 located slidably and sealingly in the cavity. The plugs of the squeezers face towards the main hydraulic plunger 3. Each of the cavities is limited on both sides (in axial direction) by a disc-shaped filter 12, e.g. a filter cloth or metal mesh known in itself, mounted on a filter plate. One filter plate is attached to the squeezer, whereas the other filter plate is attached to the back of a squeezer which forms part of an adjoining pressing element. One or more springs, e.g. two springs (not shown), are provided between the pot and squeezer of each of the pressing elements, to push the pot and squeezer apart.

The pots and squeezers have extensions, 'ears', provided with mounting openings that correspond in shape and diameter to the cross-section of the guide beams, to allow sliding motion. The extensions can be split to enable or facilitate mounting of the pots and squeezers on the guide beams.

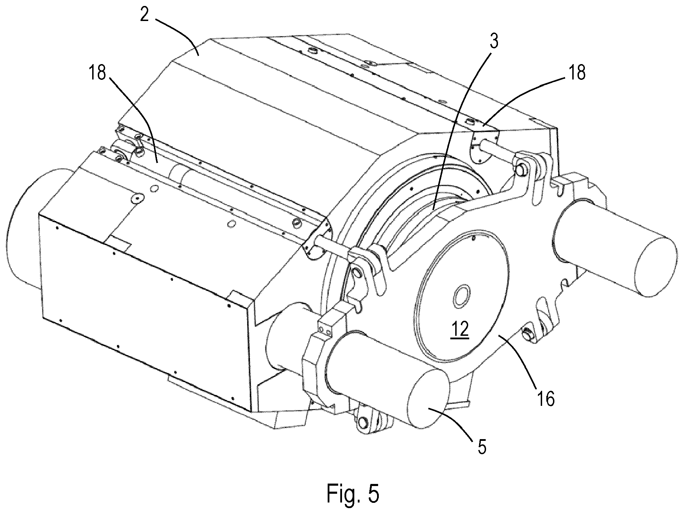

The press 1 further comprises pull rods 14 between neighboring pots (pots of neighboring pressure elements), pull rods 15 between neighboring squeezers, a dummy plate 16, present between the hydraulic cylinder and the pot nearest the hydraulic cylinder, and at least one mechanical actuator, such as two (Figures 1-4) or four (Figure 5) hydraulic cylinders 18, to pull the dummy plate and pots towards the main hydraulic cylinder.

Figure 1 shows the press in the filling or rest position. In this position, the spacing between the disc-shaped filters, and thus the volume of cavity in each of the pressing elements, is at its maximum. In this example, the spacing between the filters that are present in each of the pressing elements 7 is e.g. 55 mm in the filling position. Also, in the filling position, the plunger extends farther from the hydraulic cylinder than in the open position, preferably at least 8 centimeters farther.

Further, in this example, the inner diameter of the hydraulic cylinder is e.g. 800 mm and the diameter of each of cavities 8 is e.g. 600 mm.

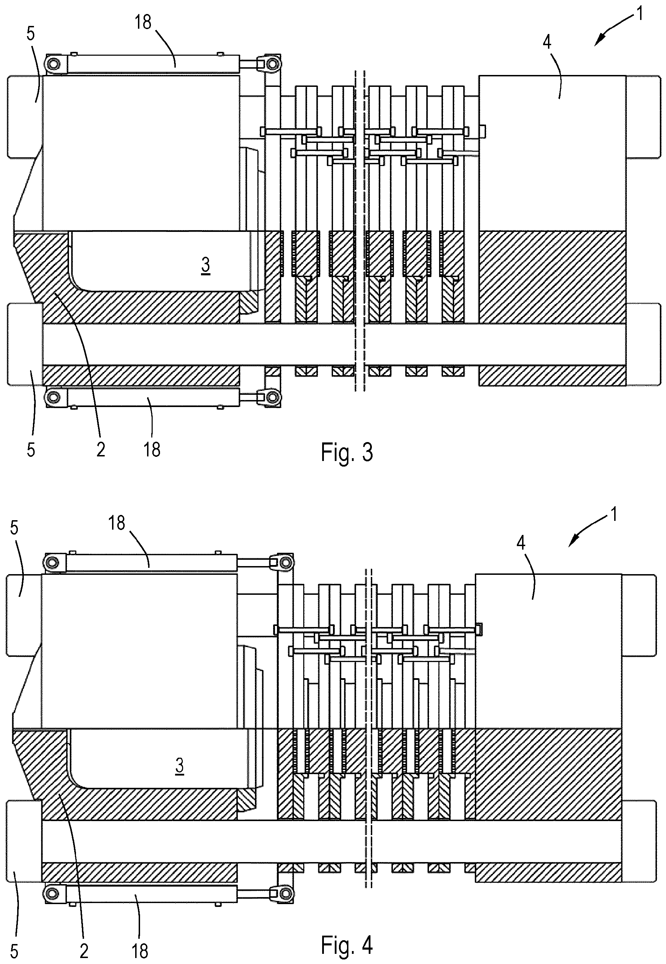

During operation, the cavities of the cocoa press are filled with cocoa mass and, once filled, the pressing elements are compressed evenly by moving the plunger of the hydraulic cylinder towards the retainer until the pressure reaches a predetermined value, e.g. 535 bar. Pressing is illustrated in Figure 2. Then, the pressure is released and the press is returned past its starting position and from there is moved further towards the hydraulic cylinder, to pull the pots over the squeezers, as illustrated in Figure 3, and cause the cocoa cakes to fall out. Finally, the pots are returned to the starting position, as illustrated in Figure 4, and the cycle is complete.

The combination of reversing the orientation of the squeezers, with the plugs facing towards the plunger - which implies that the direction of closing the pots (after the cakes from the previous cycle have been ejected) is opposite to the direction of the hydraulic plunger during pressing - and the guide beams extending through mounting sections of the pot(s) and squeezer(s) cylinder surrounding the guide beams reduces or even prevents the risk of cake explosion.

The invention is not limited to the embodiment as described above, which can be varied in several ways within the scope of the claims. E.g., the cocoa press described above can also be used or adapted for products such as seeds and/or nuts.

## Claims

1. Press (1) for separating fat containing mass, in particular mass from oily seeds, such as cocoa mass, into fat, in particular liquid fat, and cake, comprising
an hydraulic cylinder (2) and plunger (3), a retainer (4), and a plurality of parallel guide beams (5), extending between the hydraulic cylinder and the retainer, the hydraulic cylinder, beams, and retainer together forming a frame,
and a plurality of pressing elements (7) disposed in the frame and slidingly mounted on the guide beams, the pressing elements comprising a pot (8) having a cavity for receiving mass to be pressed and a squeezer (9) having a plug (10) located at least partially in the cavity,
**characterized by** the combination of i) the guide beams (5) extending through mounting sections of the pots (8) and squeezers (9), which mounting sections surround the guide beams, and *ii)* the plugs (10) of the squeezers (9) facing towards the plunger (3).

2. Press (1) according to claim 1, wherein the guide beams (5) extend through mounting sections of most, preferably all pots (8) and squeezers (9) disposed in the frame.

3. Press (1) according to claim 1 or 2, wherein the guide beams (5) extend through mounting sections in the hydraulic cylinder (2) and/or the retainer (4).

4. Press (1) according to any one of the preceding claims, wherein the mounting sections surround at least 270° of the circumference of respective guide beams (5), preferably completely surround the guide beams (5).

5. Press (1) according to any one of the preceding claims, wherein the pots (8) and squeezers (9) and preferably also the hydraulic cylinder (2) comprise openings that correspond in shape, typically round, to the cross-section of the guide beams (5) and the guide beams (5) extend through these openings.

6. Press (1) according to any one of the preceding claims or the preamble of claim 1, wherein the distance between the openings in the hydraulic cylinder (2) is larger than the distance between the openings in the pots (8) and squeezers (9), preferably at least 0,005% larger.

7. Press (1) according to claim 6, wherein the distance is at least 0,008% larger, preferably in a range from 0,01% to 0,03% larger.

8. Press (1) according to any one of the preceding claims, wherein, at least during pressing and preferably also during filling, the squeezers (9) abut the pots (8) of adjoining pressing elements (7).

9. Press (1) according to any one of the preceding claims or the preamble of claim 1, comprising pulling elements (14-16, 18) arranged to pull, during cake extraction, the squeezers (9) in the direction of the hydraulic cylinder (2).

10. Press (1) according to claim 9, wherein the pulling elements (14-16, 18) are arranged to pull, during cake extraction, the plugs (10) of the squeezers (9) through the pots (8).

11. Press (1) according to claim 9 or 10, wherein the pulling elements comprise pull rods (14) between neighboring pots (8), pull rods (15) between neighboring squeezers (9), and at least one mechanical actuator, such as one or more hydraulic cylinders (18), to pull the squeezers (9) towards the main hydraulic cylinder (2).

12. Press (1) according to any one of claims 9-11, wherein the pulling elements (14-16, 18) are arranged to pull the squeezer (9) nearest the main hydraulic cylinder (2) towards the main hydraulic cylinder (2) and preferably comprise a dummy plate (16), present between the hydraulic cylinder (2) and the pot (8) nearest the hydraulic cylinder (2) and the at least one actuator (18) is attached to the dummy plate (16).

13. Press (1) according to any one of the preceding claims, having at least a filling or rest position (Figure 1) and an open position (Figure 3) and wherein, in the filling position, the plunger (3) extends farther from the hydraulic cylinder (2) than in the open position, preferably at least 5 centimeters farther.

14. Press (1) according to any one of the preceding claims, wherein filters (12) are disposed in front of the plug (10) and on the side of the cavity opposite the plug (10) and wherein the distance between the filters (12) is in a range from 20 to 80 mm, preferably in a range from 25 to 70 mm, preferably in a range from 30 to 60 mm, preferably larger than 30 and smaller than 60 mm.

15. Press (1) according to any one of the preceding claims, wherein the diameter of the hydraulic cylinder (12) is in excess of 500 mm, preferably in excess of 550 mm and/or wherein the diameter (Dp) of cavities is in excess of 400 mm, preferably in excess of 450 mm, preferably in excess of 500 mm and/or wherein the number of pressing elements is in a range from 10 to 26, preferably in a range from 16 to 24, and/or wherein the cavities are cylindrical and/or wherein said filters are flat or substantially flat.
